# EUROPÄISCHE PATENTSCHRIFT

(11) **EP 0 907 563 B1**
(45) Veröffentlichungstag und Bekanntmachung des Hinweises auf die Patenterteilung: **08.03.2000**
(21) Anmeldenummer: 97927113.7
(22) Anmeldetag: 03.06.1997
(51) Int. Cl.: B65C 9/26, G11B 23/40

(54) **VORRICHTUNG ZUM AUFBRINGEN EINES ETIKETTS AUF EINE COMPACTDISC ODER DERGLEICHEN**
DEVICE FOR APPLYING A LABEL TO A COMPACT DIS OR THE LIKE
DISPOSITIF POUR APPLIQUER UNE ETIQUETTE SUR UN DISQUE COMPACT OU SIMILAIRE

(30) Priorität: 05.06.1996 DE 19622559; 16.07.1996 DE 19628678
(43) Veröffentlichungstag der Anmeldung: 14.04.1999
(73) Patentinhaber: Claussnitzer, Werner, 42329 Wuppertal (DE)
(72) Erfinder: Claussnitzer, Werner, 42329 Wuppertal (DE)
(74) Vertreter: Müller, Enno, Dipl.-Ing.
(86) Internationale Anmeldenummer: EP9702869
(87) Internationale Veröffentlichungsnummer: WO9746454

(56) Entgegenhaltungen:
- WO-A-96/05057
- DE-A- 2 009 816
- GB-A- 2 305 907
- JP-A- 2 127 230
- JP-A- 5 325 495
- US-A- 5 316 464

## Beschreibung

Die Erfindung betrifft eine Vorrichtung nach den Merkmalen des Oberbegriffes des Anspruches 1.

Zum Stand der Technik ist neben der WO 96/05057 insbesondere auf die DE-PS 20 09 816, JP-Hei 2-127230 und JP Hei 5-325496 zu verweisen.

Ausgehend von letztgenannter Druckschrift beschäftigt sich die Erfindung mit der technischen Aufgabe, die bekannte Vorrichtung zum zentrierten Aufbringen eines gelochten Etiketts bezüglich ihre Handhabung zu optimieren und weiter eine exakte Positionierung beim Etikettiervorgang zu sichern.

Diese Aufgabe ist beim Gegenstand des Anspruches 1 gelöst, wobei darauf abgestellt ist, daß zum Niederdrükken der CD, ohne diese selbst anfassen zu müssen, ein Stempel vorgesehen ist, der eine zentrale Bohrung besitzt, deren Innendurchmesser dem Außendurchmesser des zylindrischen Schaftes des Dorns entspricht. Erfindungsgemäß ist ein an dem Dorn selbst zentrierter, von Hand zu betätigender Stempel vorgesehen, mittels dessen auf die zu etikettierende CD eingewirkt wird. Da mittels des Stempels zugleich eine gleichmäßige Kraft über den Umfang verteilt auf die CD aufgebracht wird, ist auch hierdurch nicht nur eine die CD schonende Handhabung beim Etikettieren ermöglicht, sondern auch ein Verkanten praktisch ausgeschlossen. Die zu etikettierende Compact Disk wird auf den Dorn, dessen ringförmige Schulter, aufgelegt und auf die Auflagefläche zu-vermittels des Stempels - abgesenkt. Infolge wird auch die auf den Dorn aufgesetzte Compact Disk senkrecht zur Auflagefläche abgesenkt und trifft mit ihrer zu etikettierenden Breitseite auf die bspw. selbstklebende Seite des Etiketts auf, wenn die Ebene und die Auflagefläche ineinander fallen. Bevorzugt ist hierbei jedoch, daß die Auflagefläche vom äußeren Rand hin zur zentralen Bohrung gegenüber der Ebene in Absenkrichtung des Dorns eingetieft ist. Da eine solche Abwinklung nur wenige Grad beträgt, kann aufgrund der Flexibilität der Compactdisc diese sich leicht einer solchen schüsselförmigen Ausbildung der Basisoberseite beim Etikettieren anpassen. Ein Auswandern der Compactdisc bzw. des Dorns ist Dank der Führung nur im Bereich von Toleranzen möglich. Wenn der Durchmesser des Loches des Etiketts im wesentlichen dem des Dorns entspricht, ist für eine leichte Handhabung der Dorn sich konisch verjüngend und/oder sich abgestuft verjüngend der Auflagefläche vorstehend ausgebildet. Durch diese Querschnittsverminderung ist ein gleichsam günstiges Einfädeln des Etiketts auch gegeben. Weiter kann auch der zentrale Durchbruch der Compactdisc von einem derartigen Dorn leicht durchsetzt und damit auch die Compactdisc zentriert werden. Bevorzugt wird jedoch, daß der Dorn zu seinem freien Ende hin hierfür eine Ringschulter ausbildet, auf welcher die Compactdisc auflegbar ist, und mit einem zylindrischen Schaft den zentralen Durchbruch der Compactdisc paßgenau durchsetzt. Hierdurch ist zum einen eine exakte Zentrierung der CD auf dem Dorn gegeben und andererseits eine exakte Parallellage der vom äußeren Rand der Auflagefläche aufgespannten Ebene und/oder der Auflagefläche selbst mit aufgelegtem Etikett bzw. dessen Klebefläche und der zu etikettierenden Flachseite der Compactdisc . Als basisfeste Führung ist eine konzentrisch zum Dorn ausgebildete Mantelwand vorgesehen. Es ist insbesondere an eine rotationssymmetrische Ausbildung gedacht. Es kann die Mantelwand durch eine Bohrung der Basis ausgebildet sein, jedoch wird aus Gründen der Materialersparnis unterseitig der Auflageplatte bevorzugt ein Hohlzylinder angesetzt sein, dessen innerer Durchmesser mit der zentralen Bohrung fluchtet. Dabei kann weiter vorgesehen sein, daß die Mantelwand innerhalb der Basis und unterhalb der Auflagefläche in Absenkrichtung längsgenutet ist und daß Führungsvorsprünge des Dorns in den Nuten geführt gehalten sind. Hierdurch wird eine Führung geschaffen, in welcher eine Bewegung des Dorns lediglich in axialer Richtung möglich ist. Ein Verdrehen ist ausgeschlossen. Gleichzeitig ist eine derartige Führung leicht herstellbar. Bevorzugt wird, daß die Basis einstückig, rohrförmig mit stirnseitig abschlieBender Auflagefläche und mit unter der Auflagefläche die zentrale Bohrung einfassenden, kreissegmentartigen, zwischen sich in Absenkrichtung Schlitze für Führungsvorsprünge belassenden Wandungen ausgebildet ist. Eine solche Basis kann auch bspw. leicht als Spritzteil ausgebildet werden und aus bspw. einem ABS-Kunststoff bestehen. Bei der Ausbildung einer derartigen Führung wird weiter bevorzugt, daß die Mantelwand bzw. die Wandungen den Dorn führend umfassen. Durch diese Maßnahme kommen den bereits beschriebenen Führungsvorsprüngen auch die Funktion von Anschlägen zu. Der Anschlag der Führungsstifte in der Nichtgebrauchsstellung, d.h. wenn der Dorn der Auflagefläche frei vorsteht, erfolgt gegen die basisinnenseitige Wand der Auflagefläche. Ist, wie bevorzugt, die Mantelwand zur Führung des Dorns ringförmig umlaufend ausgebildet, kann ein Anschlag dadurch ausgebildet sein, daß der Dorn und die von der Mantelwand berandete Querschnittsfläche unterhalb der Auflageplatte korrespondierende Querschnittsvergrößerungen aufweisen. Durch die Querschnittsvergrößerungen werden Ringschultern ausgebildet, welche in Anlage aneinander das Vorstehen des Dorns über der Auflagefläche festlegen. Entsprechend ausgebildete Anschläge können gleichfalls dafür vorgesehen sein, die Absenktiefe des Dorns zu beschränken, so daß in seiner maximalen Absenklage der Dorn der Auflagefläche noch derart geringfügig vorsteht, daß durch den Dorn das Etikett nach wie vor geführt wird, jedoch ein Verkleben des Etiketts andererseits sicher gewährleistet ist. Ein Anschlag und insbesondere ein verlierungssicheres Anbinden des Dorns an die Basis erfolgt bevorzugt nach der Erfindung durch einen Teller, der die Schlitze bzw. Nuten an den freien Enden der Mantelwand bzw. Wandungen schließt und/oder durch ein Aufsitzen des freien Endes der Mantelwand auf dem Teller. Die Verbindung zwischen Teller und Mantelwand bzw. Wandungen kann bspw. durch Formschluß und/oder Verkleben erfolgen. Bevorzugt ist, daß der Teller mit der Mantelwandung bzw. Wandungen lösbar verbunden ist. Eine lösbare Verbindung wie eine Rastverbindung oder ein Klemmsitz hat insbesondere dann Vorteile, wenn vorgesehen ist, daß zwischen Teller und Dorn eine Feder angeordnet ist. Diese ist auch später bei einer derartigen Vorrichtung dann noch zugänglich. Für die Führung der Feder kann ferner vorgesehen sein, daß diese auf einem in diese eingreifenden Zapfen und in einer axialen Ausnehmung des Dorns gehalten ist. Weitere Maßnahmen zur Führung einer solchen Druckfeder erübrigen sich dann. In weiterer Ausgestaltung der Erfindung ist ferner ein Stempel noch vorgesehen, welcher einen zentralen Hohlzapfen aufweist, dessen Innendurchmesser dem Außendurchmesser des zylindrischen Schafts des Dorns entspricht. Dieser Stempel kann angefaßt an dem Hohlzapfen auf die auf der Ringschulter des Dorns von dem Schaft und der Ringschulter gehaltenen CD aufgesetzt werden. Mit seiner Stempelfläche, welche im Durchmesser etwa dem Durchmesser des Etiketts entsprechen sollte, wird die Compactdisc dann niedergedrückt. Dieser Stempel bietet zwei Vorteile. Zum einen ist ein exakt ausgerichtetes Absenken der CD ermöglicht, ohne diese selbst anzufassen. Dabei ist ein Verkanten der Compactdisc praktisch ausgeschlossen. Darüberhinaus wird durch die Stempelfläche auch im Moment des Anpressens der CD auf die Klebefläche des Etiketts gleichmäßiger Druck ausgeübt und es entsteht hierdurch auch eine gleichmäßige Verhaftung von Etikett und Compactdisc. Letztlich können Teller und Stempel baugleich sein, d.h. bspw. gleichartige Spritzlinge. Diese können gleichfalls aus einem ABS-Kunststoff sein. Hierdurch wird die Anzahl der Spritzformen verringert. Insbesondere bei einer muldenartigen Ausbildung der Auflagefläche ist daran gedacht, den Stempelbund mit Stempelfläche elastisch auszubilden. Hierdurch wird ein gleichmäßiger Anpreßdruck auch sichergestellt. In weiterer bevorzugter Ausführungsform schlägt die Erfindung in diesem Zusammenhang auch vor, daß an dem Stempel, zugeordnet einem inneren, nicht beschriebenen Bereich (in Projektion) der CD einen über die untere Stempelfläche vorragenden Vorsprung aufweist. Der Vorsprung ist weiter bevorzugt kreisringförmig ausgebildet. Darüber hinaus kann er in weiterer Einzelheit - oder auch allein, alternativ zu der kreisringförmigen Ausbildung - sternförmig verlaufende Rippen aufweisen. Die Rippen bzw. der kreisringförmige Vorsprung besitzen eine gleiche Höhe. Hiermit wird die Kraft auf einen inneren Bereich der CD konzentriert. Die Berührung zwischen der CD und dem Stempel ist minimiert. Die Höhe des kreisringförmigen Vorsprunges bzw. einer Rippe entspricht weiter bevorzugt etwa der Dicke der Scheibe des Stempels. Andererseits entspricht diese Höhe auch etwa dem Doppelten der Dicke einer CD.

Die Erfindung wird anhand der Zeichnung näher erläutert, in der lediglich Ausführungsbeispiele dargestellt sind. In der Zeichnung zeigt:
- Fig. 1: ein erstes Ausführungsbeispiel einer erfindungsgemäßen Vorrichtung zum Etikettieren einer Compactdisc und einen Stempel,
- Fig. 2: einen Schnitt durch die Vorrichtung nach Fig. 1 mit auf der Auflagefläche aufliegendem Etikett und auf den Dorn aufgesetzter CD,
- Fig. 3: im Schnitt gemäß Fig. 2 den Moment des Verhaftens von Etikett und Compactdisc,
- Fig. 4: eine Unteransicht der Basis der Vorrichtung gemäß Fig. 1 ohne Teller und Druckfeder,
- Fig. 5: einen Schnitt durch ein zweites Ausführungsbeispiel vor,
- Fig. 6: im Moment der Etikettierung,
- Fig. 7: einen Querschnitt durch eine weitere Ausführungsform, bei welcher unterseitig des Stempels ein kreisringförmiger Vorsprung ausgebildet ist und
- Fig. 8: eine Explosionsdarstellung des Gerätes mit einem Deckel gemäß Fig. 7.

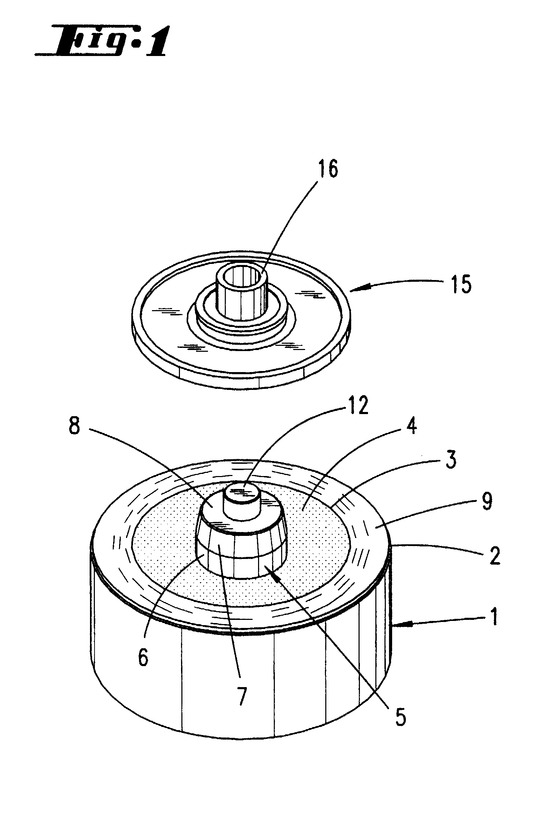

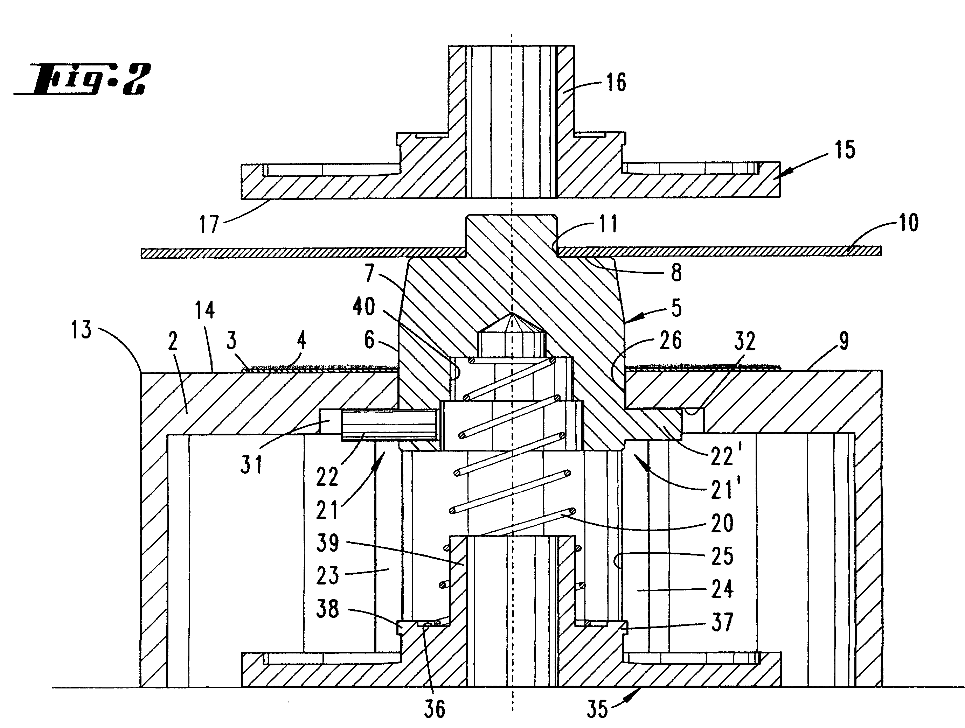

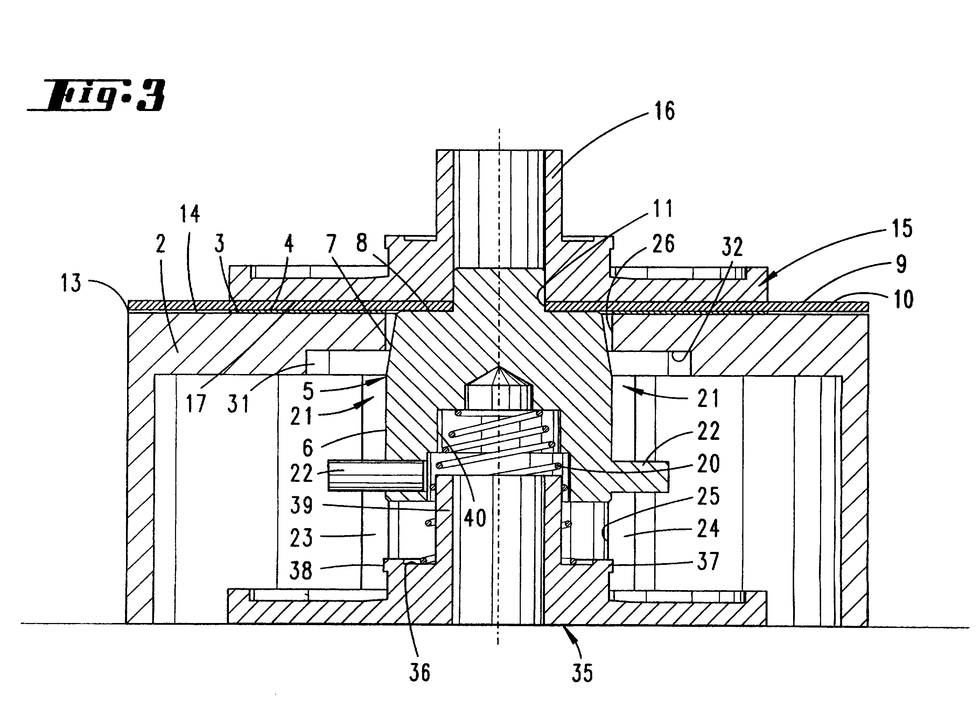

Fig. 1 zeigt die erfindungsgemäße Vorrichtung in einer isometrischen Darstellung. Die Vorrichtung besteht aus einer zylindrischen Basis 1 mit einer Auflageplatte 2 zum Auflegen eines gelochten Etiketts 3 mit dessen bspw. selbstklebender Seite, deren Haftmasse hier durch ein Punktraster 4 angedeutet ist, nach oben. Das gelochte Etikett 3 und die Auflageplatte 2 sind von einem zentralen Dorn 5 durchsetzt, vergl. auch die Fig. 2 und 3.

Der Dorn 5 weist einen zylindrischen Abschnitt 6 und einen konisch sich verjüngenden Abschnitt 7 auf. Infolge dessen kann das Etikett 3 mit einem Loch von etwa dem gleichen Durchmesser wie der Dorn 5 leicht auf die Auflageplatte 2 aufgebracht werden. Zu seinem freien Ende hin ist von dem Dorn 5 eine Ringschulter 8 in einer Ebene parallel zur Auflagefläche 9 ausgebildet. Auf dieser Ringschulter 8 wird eine Compactdisc 10, vgl. Fig. 2 aufgelegt. Deren zentraler Durchbruch 11 wird paßgenau von einem zylindrischen Schaft 12 des Dorns 5 durchsetzt. Damit liegt die Compactdisc 10 zentriert und exakt parallel zur Auflagefläche 9 gehalten auf dem Dorn 5 auf.

Die Absenkung des Dorns 5 erfolgt mittels eines Stempels 15, welcher hierfür an einem zentralen Hohlzapfen 16 anfaßbar ist. Der innere Durchmesser des Hohlzapfens 16 entspricht dem äußeren Durchmesser des zylindrischen Schafts 12. Aufgesetzt auf den Schaft wird durch diese Maßnahme die Compactdisc 10 in sicherer und zur Auflagefläche 9 parallelen Lage gehalten. Die parallele Lage ergibt sich daraus, daß die vom äußeren Rand 13 auf der Auflagefläche 9 aufgespannte Ebene 14 hier mit der Auflagefläche 9 selbst zusammenfällt. Darüberhinaus wird bei Übereinstimmung der Stempelfläche 17 mit der Erstreckung des Etiketts 3 ein gleichmäßiger Anpreßdruck der Compactdisc 10 auf das Etikett 3 auch erreicht, vergl. Fig. 3. Das Absenken des Dorns 5 erfolgt gegen die Kraft einer Feder, hier einer Druckfeder 20 in einer basisfesten Führung 21, 21'.

Die Führungen 21, 21' sind funktionsgleich und unterscheiden sich lediglich in der Ausbildung der festen Führungsvorsprünge 22, 22'. Ist der dornfeste Führungsvorsprung 21 bspw. ein eingesetzter Stift, bspw. ein Stahlstift, ist der Führungsvorsprung 22' einstückig mit dem Dorn 5 ausgebildet.

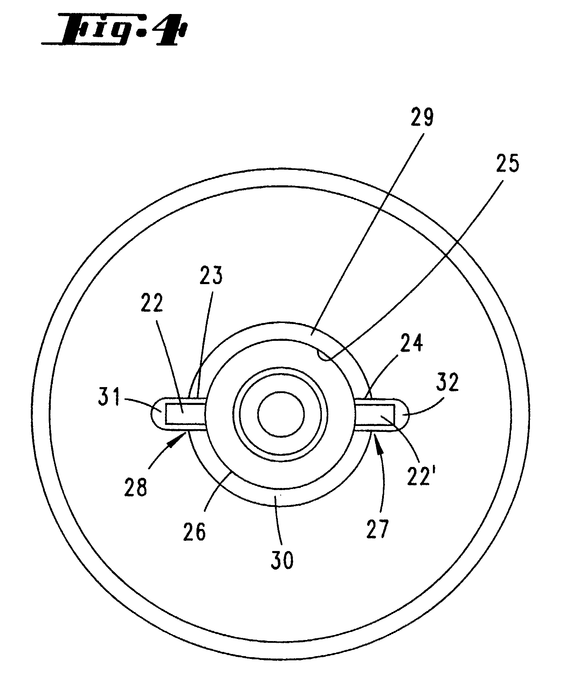

Gemeinsam ist den Führungsvorsprüngen 22, 22', daß diese in Nuten 23, 24 geführt sind, welche in eine Mantelwand 25 in Absenkrichtung sich erstreckend eingebracht sind. Die Mantelwand 25 ist konzentrisch zum Dorn 5 ausgebildet, hier kreisförmig, was bei einem runden zentralen Durchbruch 11 der Compactdisc 10 formtechnische Vorteile bringt, jedoch keine zwangsläufige Ausbildung darstellt. Die innere Weite der Mantelwand entspricht dem Durchmesser der zentralen Bohrung 25 der Auflageplatte 2. Gleichfalls entspricht dieser innere Durchmesser dem äußeren Durchmesser des zylindrischen Abschnitts 6 des Dorns 5. Es ist damit der Dorn 5 gleichfalls von der Mantelwand 25 geführt gehalten. In der Unteransicht gemäß Fig. 4 zeigt sich, daß die zentrale Bohrung 26 kreissegmentartig zwischen sich in Absenkrichtung Schlitze 27, 28 für die Führungsvorsprünge 22 bzw. 22' belassenden Wandungen 29, 30 eingefaßt ist.

Eine derartige Teilung von 180 Grad der Führungen zueinander, d.h. sich gegenüberliegender Führungen, ist lediglich beispielhaft. Eine Teilung von 90 oder 120 Grad ist gleichfalls leicht vornehmbar.

Bei einer Führung des Dorns 5 durch die Wandung 29, 30 bzw. Mantelwand 25 kann ferner daran gedacht sein, auf Führungen 21, 21' gänzlich zu verzichten und lediglich einen Anschlag vorzusehen. Der Anschlag in der in Fig. 2 dargestellten Position des Dorns 5 erfolgt unterseitig der Auflageplatte 2. Bei dem Ausführungsbeispiel sind Ausnehmungen 31, 32 für die Führungsvorsprünge 22, 22' vorgesehen. Im wesentlichen wird durch die Tiefe der Ausnehmung 31, 32 eine Dimensionierungsanpassung lediglich vorgenommen: Einerseits soll im ausreichenden Maß der Dorn 5 der Auflageplatte 9 vorstehen. Andererseits soll er mit Bezug auf seinen zylindrischen und konisch verjüngenden Abschnitt 6, 7 unter die Auflagefläche 9 innerhalb der Basis 1 absenkbar sein. Diese sollte aus Bequemlichkeits- und Stabilitätsgründen nicht zu hoch ausgebildet sein.

Für das Absenken des Dorns 5 ist ein den Weg begrenzender Anschlag nicht unbedingt nötig, da das Absenken durch das Auftreffen des Stempels 15 mit dazwischenliegender Compactdisc 10 und Etikett 3 auf die Auflagefläche 9 begrenzt ist. Andererseits müssen zum freien Ende hin Schlitze 27, 28 bzw. Nuten 23, 24 geschlossen sein, damit der Dorn unverlierbar mit der Basis 1 verbunden ist. Hierzu dient beim Ausführungsbeispiel ein Teller 35, welcher hier baugleich mit dem Stempel 15 ist. Der Teller 35 bildet eine Ringschulter 36, mit einer eckseitig umlaufenden Wulst 37 aus. Der radial überstehende Anteil dieser Wulst 37 verrastet in einer Ringnut 38 der Mantelwand 25 bzw. der Wandungen 29, 30. Der in axiale Richtung der Ringschulter 36 vorstehende Anteil der Wulst 37 bildet eine radiale Begrenzung für die Aufspreizung der Druckfeder 20, die auf der Ringschulter 36 ihre bodenseitige Abstützung findet. In die Feder 20 greift der Hohlzapfen 39 des Tellers 35 noch ein. Andernends ist die in axialer Erstreckung konisch sich verjüngende Feder in einer axialen Ausnehmung 40 des Dorns 5 gehalten. Weitere Maßnahmen zur Führung der Feder 20 bedarf es hier nicht.

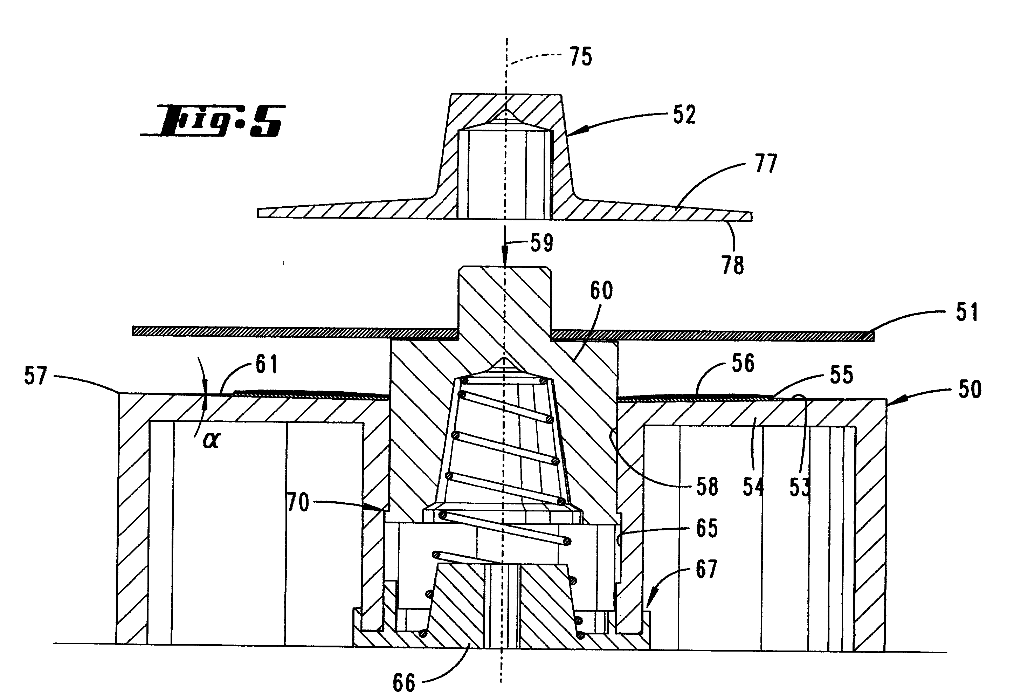

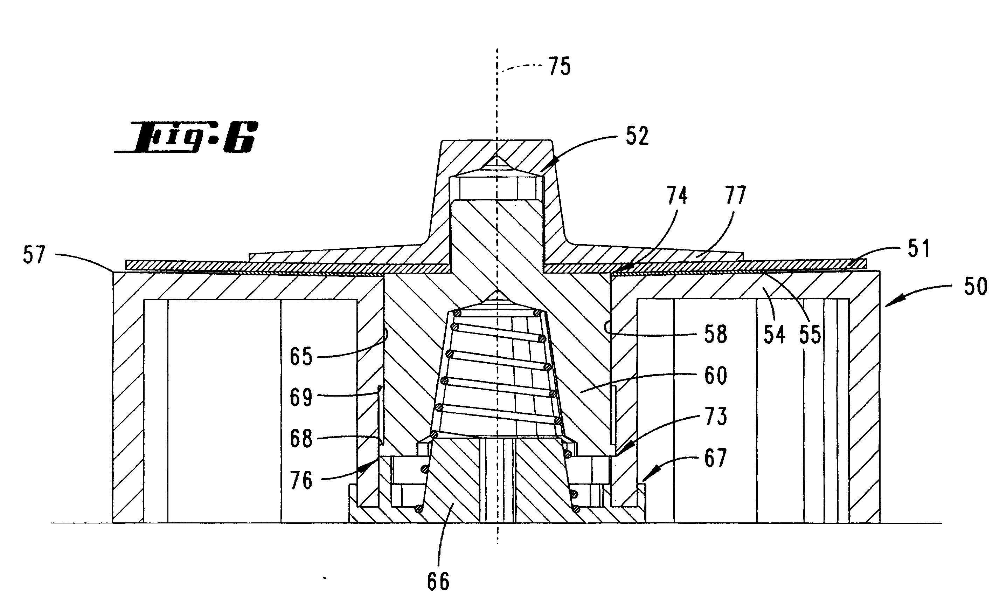

Die Fig. 5 und 6 zeigen ein zweites Ausführungsbeispiel einer Etikettiervorrichtung nach der Erfindung mit einer Basis 50, Compactdisc 51 und Stempel 52. Auf die Auflagefläche 53 der Auflageplatte 54 ist ein Etikett 55 mit nach oben gerichteter Klebefläche 56 aufgelegt. Von ihrem äußeren Rand 57 hin zur zentralen Bohrung 58 fällt die Auflagefläche 53 in Absenkrichtung gemäß Pfeil 59 des Dorns 60 ab und stellt sich mulden - oder schüsselförmig dar. Hierdurch ist eine sehr gute Anlage bzw. Auflage des Etiketts 55 auch dann gegeben, wenn dieses, bspw. aus Kunststoff gefertigt, sich leicht wellt. Der Winkel Alpha der Abwinklung der Auflagefläche gegenüber der vom äußeren Rand 57 aufgespannten Ebene 61 ist gering und beträgt bspw. 0,5 Grad lediglich. Eine solch geringe Abwinklung, welche beim Ausführungsbeispiel kegelförmig ausgebildet ist, wird durch die Elastizität der Compactdisc 51 leicht ausgeglichen, so daß eine gute Anlage immer noch sichergestellt ist.

Paraboloide und ellipsoide oder andere räumlich gekrümmte Absenkungen sind gleichfalls möglich, jedoch in der Herstellung regelmäßig aufwendiger.

Mittels des Stempels 52 wird der Dorn 60 senkrecht zur vom äußeren Rand 57 der Auflagefläche 53 aufgespannten Ebene 61 in die in Fig.6 gezeigte Stellung abgesenkt.

Bei dem Absenken wird der Dorn 60 von einer basisfesten Mantelwand 65 geführt, welche mit ihrem freien Ende auf einem Teller 66 in einem Klemmsitz 67 aufsitzt. Teller 66 und Mantelwand 65 sind so lösbar miteinander verbunden. Der Dorn 60 und die Mantelwand 65 sind abgestuft ausgebildet. Hierdurch kommt es unterhalb der Auflageplatte 54 zu korrespondierenden Querschnittsvergrößerungen des Dorns 60 und der von der Mantelwand 65 berandeten Querschnittsfläche. Durch hierdurch ausgebildete Ringschultern 68, 69 wird somit ein Anschlag 70 gemäß Fig.5 ausgebildet, welcher das Vorstehen des sich oberhalb der Auflagefläche 53 abgestuft verjüngende Dorns 60 begrenzt.

In entsprechender Weise kann ein Anschlag 73 ein Absenken des Dorns 60 auch begrenzen. Durch eine solche Begrenzung kann erreicht werden, daß auch im Moment des Etikettierens durch einen Überstand des Dorns 60 über der Auflagefläche 53 das Etikett 55 sicher zentriert wird, vgl. Pfeil 74. Hierzu ist im Gegensatz zu dem vorangegangenen Ausführungsbeispiel der Dorn 60 abgestuft lediglich ausgebildet und nicht konisch.

Der gezeigte Anschlag 73 in Verbindung mit dem Anschlag 70 kann dadurch erreicht sein, daß die Basis 50 aus einem vergleichsweisen elastischen Material besteht, und dann der Dorn 60 die Mantelwand 65 aufweitend einsetzbar ist. Gesichert wird die Verbindung durch den Klemmsitz 67 des Tellers 66.

Ein alternativer Anschlag 76 ist links der Symmetrieachse 75 in der Fig.6 noch dargestellt. Hier wird eine mit der Unterseite des Dorns 60 korrespondierende Ringschulter durch den Teller 66 ausgebildet.

Der Stempel 52 weist einen Stempelbund 77 mit einer Stempelfläche 78 auf. Dieser Stempelbund 77 ist bei diesem Ausführungsbeispiel elastisch ausgebildet, damit trotz der muldenartigen Einziehung der Auflagefläche 53 eine sichere Anlage der gleichfalls elastischen Compactdisc 51 eine sichere Etikettierung durch eine gute Anlage von Etikett 55 und Compactdisc 51 auf der Auflagefläche 53 auch sicher gegeben ist.

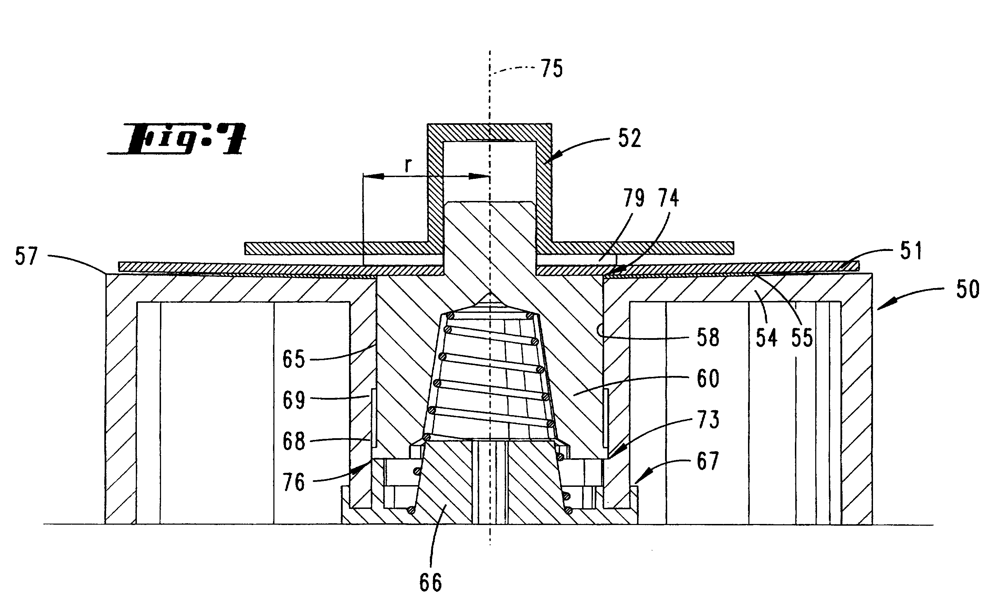

Die Ausführungsform gemäß Fig. 7 entspricht der Ausführungsform gemäß Fig. 5 bzw. Fig. 6. Zusätzlich ist jedoch hier an dem Stempel 52 unterseitig der Stempelfläche 78 ein kreisringförmiger Vorsprung 79 ausgebildet. Es ist ersichtlich, daß der kreisringförmige Vorsprung 79 in einem Radius r zu der Symmetrieachse 75 ausgebildet ist, der etwa dem Durchmesser des zylindrischen Schaftes 12 entspricht. Andererseits ist auch hinsichtlich der Anordnung des Vorsprungs 79 eine Orientierung an dem zentralinneren, unbeschriebenen Bereich der CD vorgenommen. So ist auch sichergestellt, daß die CD nicht in dem beschriebenen Bereich von dem Stempel 52 beaufschlagt wird.

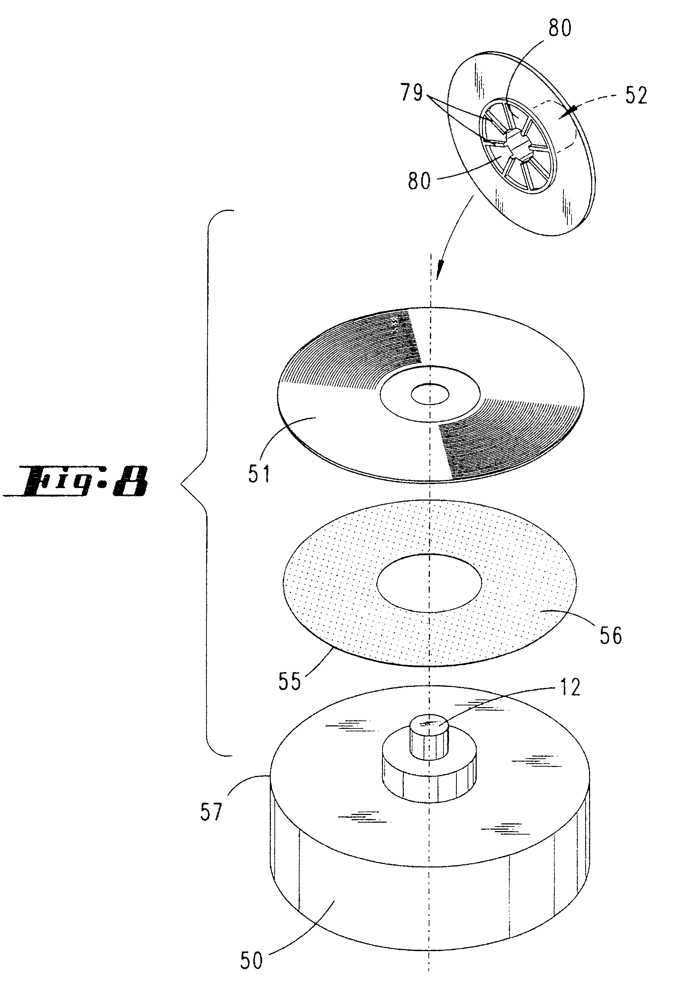

Wie in weiterer Einzelheit der Explosionsdarstellung der Fig. 8 zu entnehmen ist, sind im weiteren noch, ausgehend von der Bohrung des Hohlzapfens 16, an einer Radialen orientierte sternförmige Rippen 80 ausgeformt. Die Rippen 80 weisen ein gleiches Überstanzmaß bzgl. der Stempelfläche 78 auf wie der kreisringförmige Vorsprung 79. Der kreisringförmige Vorsprung 79 und/oder die sternförmig ausgerichteten Rippen - von denen insgesamt ersichtlich acht vorgesehen sind - wirken auch beim Betätigen kombinativ zusammen mit der Absenkung der Auflagefläche 53.

## Patentansprüche

1. Vorrichtung zum zentrierten Aufbringen eines gelochten Etiketts auf eine Compact Disk oder dergleichen, mit einer Basis (1), welche eine Auflageplatte (2) mit einer zentralen Bohrung (26) zur Auflage des Etiketts (3) aufweist, wobei ein mit der Basis (1) verbundener zentraler Dorn (5) die zentrale Bohrung (26) durchsetzt, der Auflagefläche (9) vorsteht und gegen die Kraft einer Feder (20) senkrecht zur vom äußeren Rand (13) der Auflagefläche (9) aufgespannten Ebene (14) in einer basisfesten Führung (21, 21') absenkbar ist, wobei weiter der Dorn (5) an seinem freien Ende einen zylindrischen Schaft und eine Ringschulter (8) ausbildet, dadurch gekennzeichnet, daß der Schaft den zentralen Durchbruch der Compakt Disk paßgenau durchsetzt und die CD auf der Ringschulter (8) auflegbar ist und daß zum Niederdrücken der Compact Disk (10), ohne diese selbst anfassen zu müssen, ein Stempel (15, 52) vorgesehen ist, der eine Bohrung besitzt, deren Innendurchmesser dem Außendurchmesser des zylindrischen Schaftes des Dorns (5) entspricht.

2. Vorrichtung nach Anspruch 1, dadurch gekennzeichnet daß der Dorn (5) senkrecht zur Auflagefläche (9) absenkbar ist.

3. Vorrichtung nach Anspruch 1, dadurch gekennzeichnet, daß die Auflagefläche (53) vom äußeren Rand (57) hin zur zentralen Bohrung (58) gegenüber der Ebene (61) in Absenkrichtung (59) des Dorns (60) eingetieft ist.

4. Vorrichtung nach einem oder mehreren der vorangegangenen Ansprüche, dadurch gekennzeichnet, daß der Dorn (5) sich konisch verjüngend und/oder sich abgestuft verjüngend der Auflagefläche (9) vorsteht.

5. Vorrichtung nach einem oder mehreren der vorangegangenen Ansprüche, dadurch gekennzeichnet, daß konzentrisch zum Dorn (5) eine basisfeste Mantelwand (25) ausgebildet ist.

6. Vorrichtung nach Anspruch 5, dadurch gekennzeichnet, daß innerhalb der Basis (1) und unterhalb der Auflagefläche (9) die Mantelwand (25) in Absenkrichtung längsgenutet ist und daß Führungvorsprünge (22, 22') des Dorns (5) in den Nutzen (23, 24) geführt gehalten sind.

7. Vorrichtung nach einem oder mehreren der vorangegangenen Ansprüche, dadurch gekennzeichnet, daß die Basis (1) einstückig, rohrförmig mit stirnseitig abschließender Auflagefläche (9) und mit unter der Auflagefläche (9) die zentrale Bohrung (26) einfassenden, kreissegmentartigen, zwischen sich in Absenkrichtung Schlitze (27, 28) für Führungsvorsprünge (22, 22') belassenden Wandungen (29, 30) ausgebildet ist.

8. Vorrichtung nach einem oder mehreren der Ansprüche 5 bis 7, dadurch gekennzeichnet, daß die Mantelwand (25) bzw. die Wandungen (29, 30) den Dorn (5) führend umfassen.

9. Vorrichtung nach einem oder mehreren der Ansprüche 5 bis 8, dadurch gekennzeichnet, daß der Dorn (60) und die von der Mantelwand (65) berandete Querschnittsfläche unterhalb der Auflageplatte korrespondierende Querschnittsvergrößerung und/oder Verjüngungen aufweisen.

10. Vorrichtung nach einem oder mehreren der vorangegangenen Ansprüche, dadurch gekennzeichnet, daß durch einen Anschlag (73) der Absenkweg des Dorns (60) derart begrenzt ist, daß in der maximalen Absenklage das Etikett (55) zentriert von dem Dorn (60) gehalten ist.

11. Vorrichtung nach einem oder mehreren der Ansprüche 7 bis 10, dadurch gekennzeichnet, daß die Schlitze (27, 28) bzw. Nuten (23, 24) an den freien Enden der Mantelwand (25) bzw. Wandungen (29, 30) und/oder von einem Teller (35) geschlossen sind und/oder das freie Ende der Mantelwand (65) auf einem Teller (66) aufsitzt.

12. Vorrichtung nach einem oder mehreren der Ansprüche 5 bis 11, dadurch gekennzeichnet, daß der Teller (35) mit der Mantelwandung (25) bzw. Wandungen (29, 30) lösbar verbunden ist.

13. Vorrichtung nach einem oder mehreren der vorangegangenen Ansprüche, dadurch gekennzeichnet, daß zwischen Teller (35, 66) und Dorn (5) eine Druckfeder (20) angeordnet ist.

14. Vorrichtung nach Anspruch 13, dadurch gekennzeichnet, daß die Druckfeder (20) auf einem in diese eingreifenden Zapfen (39) und in einer axialen Ausnehmung (40) des Dorns gehalten ist.

15. Vorrichtung nach einem oder mehreren der vorangegangenen Ansprüche, dadurch gekennzeichnet daß die Bohrung in einem zentralen Hohlzapfen (16) des Stempels ausgebildet ist.

16. Vorrichtung nach Anspruch 15, dadurch gekennzeichnet, daß Teller (35) und Stempel (15) baugleich sind.

17. Vorrichtung nach einem der Ansprüche 15 oder 16, dadurch gekennzeichnet, daß der Stempel (52) einen elastischen Stempelbund (77) aufweist.

18. Vorrichtung nach einem oder mehreren der vorangegangenen Ansprüche , dadurch gekennzeichnet, daß der Stempel einen über die untere Stempelfläche vorragenden Vorsprung aufweist.

19. Vorrichtung nach Anspruch 18, dadurch gekennzeichnet, daß der Vorsprung kreisringförmig ist.

20. Vorrichtung nach Anspruch 18, dadurch gekennzeichnet, daß der Vorsprung in Form von sternförmig verlaufenden Rippen (80) ausgebildet ist.

## Claims

1. Apparatus for centralised application of a label with a hole in it to a compact disk or the like, the apparatus having a base (1) which has a bearing plate (2) with a central hole (26) for placement of the label (3), a central pin (5) which is connected to the base (1) passing through the central hole (26), projecting beyond the bearing surface (9) and being capable of being lowered, against the force of a spring (20), in a guide (21, 21') which is fixed to the base, at right angles to the plane (14) defined by the outer edge (13) of the bearing surface (9), the pin (5) providing a cylindrical shank at its free end and an annular shoulder (8), characterized in that the shank passes through the central hole of the compact disk (10) with an accurate fit and the CD can be placed on the annular shoulder (8), and that in order to press down the compact disk (10), without having to grip the compact disk itself, a ram (15, 52) is provided, the ram having a hole, the inner diameter of which corresponds to the outer diameter of the cylindrical shank of the pin (5).

2. Apparatus according to Claim 1, characterized in that the pin (5) can be lowered at right angles to the bearing surface (9).

3. Apparatus according to Claim 1, characterised in that the bearing surface (53) is set back with respect to the plane (61) in the direction (59) in which the pin (60) is lowered, from the outer edge (57) towards the central hole (58).

4. Apparatus according to one or more of the preceding claims, characterised in that the pin (5) projects beyond the bearing surface (9), tapering conically and/or tapering in a stepped manner.

5. Apparatus according to one or more of the preceding claims, characterised in that a casing wall (25) which is fixed to the base is formed to be concentric with the pin (5).

6. Apparatus according to Claim 5, characterised in that, inside the base (1) and underneath the bearing surface (9), the casing wall (25) is longitudinally grooved in the lowering direction, and that guide projections (22, 22') of the pin (5) are guidingly held in the grooves (23, 24).

7. Apparatus according to one or more of the preceding claims, characterised in that the base (1) is provided as one piece, in the form of a tube with a bearing surface (9), which is closed at the end, and with walls (29, 30) which enclose the central hole (26) under the bearing surface (9), in the manner of circular segments, walls (29,30) leaving between them, in the lowering direction, slots (27, 28) for guide projections (22, 22').

8. Apparatus according to one or more of the preceding claims, characterised in that the casing wall (25) and the walls (29, 30) guidingly surround the pin (5).

9. Apparatus according to one or more of Claims 5 to 8, characterised in that the pin (60) and the cross-sectional area bounded by the casing wall (65) have a corresponding increase and/or reductions in cross section underneath the bearing plate.

10. Apparatus according to one or more of the preceding claims, characterised in that the path of lowering of the pin (60) is limited by a stop (73) in such a manner that, in the maximum lowered position, the label (55) is held centralised by the pin (60).

11. Apparatus according to one or more of Claims 7 to 10, characterised in that the slots (27, 28) and grooves (23, 24) are closed at the free ends of the casing wall (25) and walls (29, 30) and/or by a plate (35), and/or the free end of the casing wall (65) is seated on a plate (66).

12. Apparatus according to one or more of Claims 5 to 11, characterised in that the plate (35) is releasably connected to the casing wall (25) and/or walls (29, 30).

13. Apparatus according to one or more of the preceding claims, characterised in that a compression spring (20) is arranged between plate (35, 66) and pin (5).

14. Apparatus according to Claim 13, characterised in that the compression spring (20) is held on a peg (39) which engages in the spring and in an axial recess (40) in the pin.

15. Apparatus according to one or more of the preceding claims, characterised in that the hole is formed in a central hollow peg (16) of the ram.

16. Apparatus according to Claim 15, characterised in that plate (35) and ram (15) are physically identical.

17. Apparatus according to one of Claims 15 or 16, characterised in that the ram (52) has a resilient ram collar (77).

18. Apparatus according to one or more of the preceding claims, characterised in that the ram has a projection extending beyond the lower surface of the ram.

19. Apparatus according to Claim 18, characterized in that the projection is annular.

20. Apparatus according to Claim 18, characterised in that the projection is provided in the form of ribs (80) which run in a star shape.

## Revendications

1. Dispositif pour appliquer de façon centrée une étiquette perforée sur un disque compact ou similaire, comprenant une base (1) qui comporte une plaque d'appui (2) avec un alésage central (26) pour l'appui de l'étiquette (3), dans lequel un mandrin central (5) relié à la base (1) traverse l'alésage central (26), fait saillie sur la surface d'appui (9) et est susceptible de s'abaisser à l'encontre de la force de réaction d'un ressort (20), perpendiculairement au plan (14) de serrage délimité par le bord extérieur (13) de la surface d'appui (9), en conservant un guidage (21, 21') continu par rapport à la base, dans lequel en outre le mandrin (5) forme à son extrémité libre un arbre cylindrique et un épaulement annulaire (8), l'arbre traverse de façon ajustée la découpe centrale du disque compact qui est susceptible d'être posé sur l'épaulement annulaire, caractérisé en ce que pour presser vers le bas le disque compact (10) sans devoir le saisir lui-même, est prévu un tampon (15, 52) qui présente un alésage dont le diamètre intérieur correspond au diamètre extérieur de l'arbre cylindrique du mandrin (5).

2. Dispositif selon la revendication 1, caractérisé en ce que le mandrin (5) est susceptible d'être abaissé perpendiculairement à la surface d'appui (9).

3. Dispositif selon la revendication 1, caractérisé en ce que la surface d'appui (53) est approfondie en creux depuis le bord extérieur (57) vers l'alésage central (58), par rapport au plan (61 ) dans la direction d'abaissement (59) du mandrin (60).

4. Dispositif selon l'une ou plusieurs des revendications précédentes, caractérisé en ce que le mandrin (5) s'effile de façon conique et/ou fait saillie de façon effilée en gradins au-dessus de la surface d'appui (9).

5. Dispositif selon l'une ou plusieurs des revendications précédentes, caractérisé en ce qu'une paroi d'enveloppe (25) solidaire de la base est réalisée concentriquement au mandrin (5).

6. Dispositif selon la revendication 5, caractérisé en ce qu'à l'intérieur de la base (1) et au-dessous de la surface d'appui (9), la paroi d'enveloppe (25) est munie de nervures dans la direction d'abaissement, et en ce que des saillies de guidage (22, 22') du mandrin (5) sont maintenues de façon guidée dans les rainures (23, 24).

7. Dispositif selon l'une ou plusieurs des revendications précédentes, caractérisé en ce que la base (1) est réalisée monobloc, en forme tubulaire, avec une surface d'appui (9) frontale et de fermeture, et avec en dessous de la surface d'appui (9) des fentes (27, 28) qui entre elles, dans la direction de l'abaissement, encadrent l'alésage central (26), en forme de segments de cercle, pour des parois (29, 30) laissant passer des saillies de guidage (22, 22').

8. Dispositif selon l'une des revendications 5 à 7, caractérisé en ce que la paroi d'enveloppe (25) ou les parois (29, 30) entourent le mandrin (5), en assurant son guidage.

9. Dispositif selon l'une ou plusieurs des revendications 5 à 8, caractérisé en ce que le mandrin (60) et la surface de section transversale délimitée par la paroi d'enveloppe (65) présentent en dessous de la plaque d'appui des augmentations ou des diminutions correspondantes de la section transversale.

10. Dispositif selon l'une ou plusieurs des revendications précédentes, caractérisé en ce que le trajet d'abaissement du mandrin (60) est délimité par une butée (73), de telle façon que, dans la position d'abaissement maximal, l'étiquette (55) soit maintenue centrée par le mandrin (60).

11. Dispositif selon l'une ou plusieurs des revendications 7 à 10, caractérisé en ce que les fentes (27, 28) ou les rainures (23, 24) sont fermées aux extrémités libres de la paroi d'enveloppe (25) ou des parois (29, 30) et/ou d'un plateau (35), et/ou en ce que l'extrémité libre de la paroi d'enveloppe (65) est en appui sur un plateau (66).

12. Dispositif selon l'une ou plusieurs des revendications 5 à 11, caractérisé en ce que le plateau (35) est relié de façon amovible à la paroi d'enveloppe (25) ou aux parois (29, 30).

13. Dispositif selon l'une ou plusieurs des revendications précédentes, caractérisé en ce qu'entre le plateau (35) et le mandrin (5) est disposé un ressort de compression (20).

14. Dispositif selon la revendication 13, caractérisé en ce que le ressort de compression (20) est maintenu sur une broche (39) s'engageant dans le ressort et est maintenu dans une cavité axiale (40) du mandrin.

15. Dispositif selon l'une ou plusieurs des revendications précédentes, caractérisé en ce que l'alésage est réalisé dans une broche creuse centrale (16) du tampon.

16. Dispositif selon la revendication 15, caractérisé en ce que le plateau (35) et le tampon (15) présentent la même forme et les mêmes dimensions.

17. Dispositif selon l'une des revendications 15 ou 16, caractérisé en ce que le tampon (52) présente une collerette élastique de tampon (77).

18. Dispositif selon l'une ou plusieurs des revendications précédentes, caractérisé en ce que le tampon comporte sur la surface inférieure de tamponnement une partie ressortant en saillie.

19. Dispositif selon la revendication 18, caractérisé en ce que la saillie est de forme circulaire.

20. Dispositif selon la revendication 18, caractérisé en ce que la saillie est réalisée sous la forme de nervures (80) courant en forme d'étoile.
